(19) Europäisches Patentamt / European Patent Office / Office européen des brevets

(11) **EP 4 765 235 A1**

(12) **EUROPEAN PATENT APPLICATION**
published in accordance with Art. 153(4) EPC

(43) Date of publication:
**24.06.2026 Bulletin 2026/26**

(21) Application number: **25738961.9**

(22) Date of filing: **08.01.2025**

(51) International Patent Classification (IPC):
$H01M\ 4/136^{(2010.01)}$    $H01M\ 4/58^{(2010.01)}$
$H01M\ 4/1397^{(2010.01)}$    $H01M\ 4/04^{(2006.01)}$
$H01M\ 10/052^{(2010.01)}$    $C01B\ 25/45^{(2006.01)}$
$H01M\ 4/02^{(2006.01)}$

(52) Cooperative Patent Classification (CPC):
C01B 25/45; H01M 4/02; H01M 4/04; H01M 4/136;
H01M 4/1397; H01M 4/58; H01M 10/052;
Y02E 60/10

(86) International application number:
**PCT/KR2025/000428**

(87) International publication number:
**WO 2025/150888 (17.07.2025 Gazette 2025/29)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **10.01.2024 KR 20240003888**
**11.12.2024 KR 20240183777**

(71) Applicant: **LG Energy Solution, Ltd.**
**Seoul 07335 (KR)**

(72) Inventors:
• **KIM, Dong Hwi**
**Daejeon 34122 (KR)**
• **KIM, Gun Woo**
**Daejeon 34122 (KR)**
• **NA, Sang Mun**
**Daejeon 34122 (KR)**
• **PARK, Sin Young**
**Daejeon 34122 (KR)**
• **JEON, Hye Lim**
**Daejeon 34122 (KR)**

(74) Representative: **Hoffmann Eitle**
**Patent- und Rechtsanwälte PartmbB**
**Arabellastraße 30**
**81925 München (DE)**

(54) **POSITIVE ELECTRODE AND MANUFACTURING METHOD THEREFOR**

(57) The present disclosure relates to a positive electrode and a method of manufacturing the same. The positive electrode includes lithium manganese iron phosphate with an olivine structure as a positive electrode active material, which provides high structural stability. In addition, the lithium manganese iron phosphate can be easily controlled for particle size distribution by doping and/or substituting with one or more metals, therefore the positive electrode including the same has the advantages of excellent rolling density and energy density.

[FIG. 1]

EP 4 765 235 A1

## Description

[Technical Field]

The present disclosure relates to a positive electrode and a method for manufacturing the same.
This application claims the benefit of priority from Korean Patent Application No. 10-2024-0003888, filed on January 10, 2024, and Korean Patent Application No. 10-2024-0183777, filed on December 11, 2024, the entire contents disclosed therein are incorporated by reference into this disclosure.

[Background]

Recently, secondary batteries have been widely applied not only to small devices such as portable electronic devices, but also to medium and large-sized devices such as battery packs for hybrid vehicles or electric vehicles, or power storage devices. In particular, as interest in environmental issues has increased recently, much research is being conducted on electric vehicles, hybrid electric vehicles, etc. that can replace vehicles using fossil fuel such as gasoline vehicles, diesel vehicles, etc. which are one of the major causes of air pollution.
Generally, lithium secondary batteries have a structure in which an electrode assembly comprising a positive electrode, a negative electrode, and a separator is impregnated with a lithium electrolyte. In this case, each electrode is manufactured by coating an electrode slurry on a current collector. The electrode slurry is prepared by mixing an electrode active material for storing energy, a conductive material for providing electrical conductivity, and a binder for adhering them to the current collector and providing binding force between them in a solvent such as NMP (N-methyl pyrrolidone), etc.
The positive electrode includes a metal oxide, such as LCO ($LiCoO_2$), LMO ($LiMn_2O_4$), LFP ($LiFePO_4$), or NCM ($LiNi_{1/3}Co_{1/3}Mn_{1/3}O_2$), as a positive electrode active material capable of reversibly intercalating and deintercalating lithium.
Among these, compounds with a layered crystal structure, such as NCM-based compounds, LCO-based compounds, and NCA-based compounds are well-suited for lithium-ion storage and exhibit high lithium-ion diffusion rates, making them applicable as positive electrode active materials in high-capacity and high-power secondary batteries. However, compounds with a layered crystal structure have low chemical and structural stability, which can easily lead to decomposition under high temperature conditions. This reduces the safety of secondary batteries.
On the other hand, LFP-based compounds with an olivine crystal structure exhibit high structural stability with a hexagonal crystal form in which phosphorus (P) and oxygen (O) are strongly bonded. Therefore, LFP-based compounds with an olivine crystal structure can easily maintain their crystal structure even if lithium ions are completely deintercalated during charging, and the crystal structure does not easily decompose under high-temperature conditions. However, these compounds have low energy density, which represents the amount of energy that a battery can store per unit weight/volume. Therefore, there is a limitation in that the size or weight of the secondary battery should be excessively increased to implement high energy density with LFP-based compounds having an olivine crystal structure.
Accordingly, positive electrode active materials in the form of manganese-containing compounds have been developed to increase the energy density of conventional LFP-based compounds with an olivine crystal structure. These positive electrode active materials have a structure in which manganese is partially substituted at the position where iron atoms are located, achieving an effect of improving the energy density of iron phosphate by about 5% or more. Despite such effects, additional energy density expression of LFP-type compounds applied to medium and large-sized secondary batteries is required.
Therefore, there is a demand for technology development for positive electrodes for lithium secondary batteries that can implement high energy density while including LFP-based compounds with an olivine structure as a positive electrode active material to implement high safety of lithium secondary batteries.

[Related Art Document]

Korean Patent Application Publication No. 10-2016-0064136

[Summary]

[Technical Problem]

An object of the present disclosure is to provide a positive electrode for a lithium secondary battery that can implement a high energy density while including an LFP-based compound having an olivine structure as a positive electrode active material in order to implement a high safety of the lithium secondary battery, and a method for manufacturing the same.

[Technical Solution]

To solve the problems described above,
the present disclosure provides a positive electrode comprising:

a positive electrode current collector, and
a positive electrode active layer provided on at least one side of the positive electrode current collector and including a compound represented by the following chemical formula 1 as a positive electrode active material:

[Chemical Formula 1] $\qquad$ $Li_{1+a}Mn_{1-6-c}Fe_bM^1_cPO_4$

in the above chemical formula 1,
$M^1$ is one or more of Ti, V, Zr, Sr, Sb, B, or Nb,
a, b, and c are $-0.5{\leq}a{\leq}0.5$, $0.1{\leq}b{\leq}0.8$, $0.001{\leq}c{\leq}0.2$.
In this case, the positive electrode active material may include one or more compounds represented by chemical formula 2 to chemical formula 5:

[Chemical Formula 2] $\qquad$ $Li_{1+a}Mn_{1-b-x}Fe_bTi_xPO_4$

[Chemical Formula 3] $\qquad$ $Li_{1+a}Mn_{1-b-x-y}Fe_bTi_xV_yPO_4$

[Chemical Formula 4] $\qquad$ $Li_{1+a}Mn_{1-x-y-z}Fe_bTi_xV_yNb_zPO_4$

[Chemical Formula 5] $\qquad$ $Li_{1+a}Mn_{1-b-x-y-z}Fe_bTi_xZr_yNb_zPO_4$

wherein chemical formula 2 to chemical formula 5,
a, b, x, y, and z are $-0.5{\leq}a{\leq}0.5$, $0.1{\leq}b{\leq}0.8$, $0<x{\leq}0.2$, $0<y{\leq}0.1$, $0<z{\leq}0.1$, provided that $0.001{\leq}x+y{\leq}0.2$ or $0.001{\leq}x+y+z{\leq}0.2$.

In addition, the positive electrode active material may have a lattice constant c ranging from 4.69165 Å to 4.80 Å when analyzed by X-ray diffraction, and satisfy equation 1:

$$[\text{Equation 1}]$$

$$y=-px+q$$

wherein the equation 1,

y represents the lattice constant c,

x represents $\sqrt{a^2+b^2}$ , wherein a and b are lattice constants a and b, respectively,

p and q are $-0.08{\leq}p{\leq}-0.07$ and $5{\leq}q{\leq}6$, respectively.

Moreover, the positive electrode active material may have an average particle diameter ($D_{30}$) ranging from 0.7 $\mu$m to 1.3 $\mu$m.
In addition, the positive electrode active material may have a $D_{90}/D_{10}$ ranging from 5.5 to 9.0 in a particle diameter distribution analysis, and may have a $D_{10}$ ranging from 0.2 $\mu$m to less than 0.6 $\mu$m.
Further, the positive electrode active material may have a rolling density of 2.3 g/cc or more at 9,000 kgf pressurization.
Furthermore, in one embodiment, the present disclosure provides a method for manufacturing the positive electrode according to the present disclosure, comprising:

coating the at least one side of a positive electrode current collector with a positive electrode slurry including a compound represented by the following chemical formula 1 as a positive electrode active material, and

drying the coated positive electrode slurry so as to form the positive electrode active layer:

[Chemical Formula 1]  $\quad\quad$ $Li_{1+a}Mn_{1-6-c}Fe_bM^1_cPO_4$

in the above chemical formula 1,
$M^1$ is one or more of Ti, V, Zr, Sr, Sb, B, or Nb,
a, b, and c are $-0.5 \leq a \leq 0.5$, $0.1 \leq b \leq 0.8$, $0.001 \leq c \leq 0.2$.

Here, the positive electrode active material may include one or more compounds represented by chemical formula 2 to chemical formula 5:

[Chemical Formula 2]  $\quad\quad$ $Li_{1+a}Mn_{1-b-x}Fe_bTi_xPO_4$

[Chemical Formula 3]  $\quad\quad$ $Li_{1+a}Mn_{1-b-x-y}Fe_bTi_xV_yPO_4$

[Chemical Formula 4]  $\quad\quad$ $Li_{1+a}Mn_{1-x-y-z}Fe_bTi_xV_yNb_zPO_4$

[Chemical Formula 5]  $\quad\quad$ $Li_{1+a}Mn_{1-b-x-y-z}Fe_bTi_xZr_yNb_zPO_4$

wherein chemical formula 2 to chemical formula 5,
a, b, x, y, and z are $-0.5 \leq a \leq 0.5$, $0.1 \leq b \leq 0.8$, $0 < x \leq 0.2$, $0 < y \leq 0.1$, $0 < z \leq 0.1$, provided that $0.001 \leq x+y \leq 0.2$ or $0.001 \leq x+y+z \leq 0.2$.
In addition, the positive electrode active material may be prepared by a step of calcining a mixture of lithium manganese iron phosphate represented by chemical formula 6 and a metal precursor compound at a temperature of 500°C or higher:

[Chemical Formula 6]  $\quad\quad$ $Li_{1+m}Mn_{1-n}Fe_nPO_4$

wherein chemical formula 6,
m and n are $-0.5 \leq m \leq 0.5$, $0.1 \leq n \leq 0.8$.
In this case, the lithium manganese iron phosphate represented by the chemical formula 6 may be heat-treated at 500°C to 900°C before being mixed with the metal precursor compound.

[Advantageous Effects]

The positive electrode according to the present disclosure includes lithium manganese iron phosphate with an olivine structure as a positive electrode active material, which provides high structural stability. Furthermore, the lithium manganese iron phosphate can be easily controlled for particle distribution by doping and/or substituting with one or more metals. Therefore, the positive electrode including the same has the advantages of excellent energy density and rolling density.

[Brief Description of the Drawings]

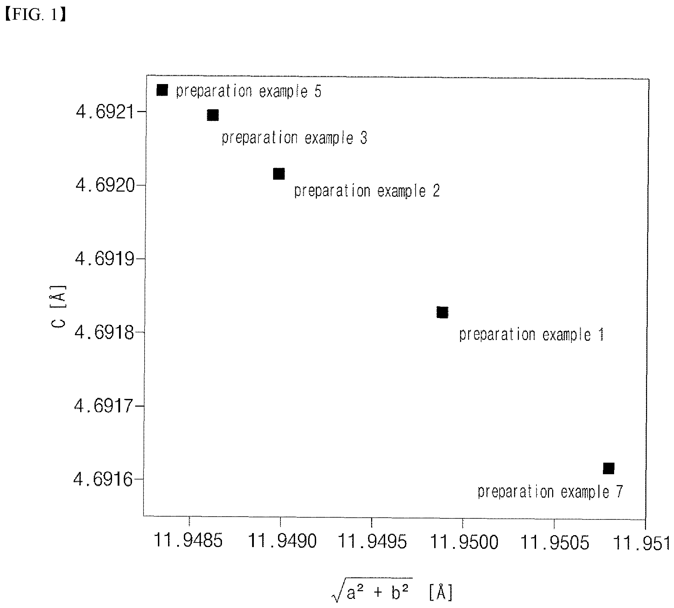

FIG. 1 is a graph showing the correlation between the lattice constant c and lattice constants a and b of a positive electrode active material in X-ray diffraction (XRD) analysis.

[Detailed Description]

The present disclosure may have various modifications and various embodiments, and specific embodiments will be described in detail in the following detailed description.
However, it should be understood that the present disclosure is not limited to the specific embodiments, and includes all modifications, equivalents, or alternatives within the spirit and technical scope of the present disclosure.
The terms "comprise," "include," and "have" used herein designate the presence of characteristics, numbers, steps, actions, components, or members described in the specification or a combination thereof, and it should be understood that the possibility of the presence or addition of one or more other characteristics, numbers, steps, actions, components, members, or a combination thereof is not excluded in advance.
In addition, in the present specification, "average particle diameter ($D_{50}$)" refers to the particle diameter at which the cumulative value in the particle diameter distribution becomes 50%, and this is also called the median diameter. The average particle diameter can be measured by a method commonly applied in the art. For example, the average particle diameter can be measured using an analyzer such as a particle size analyzer or an analyzer using laser diffraction scattering particle size distribution measurement method, but is not limited thereto.

Hereinafter, the present disclosure will be described in more detail.

**Positive electrode**

The present disclosure provides a positive electrode comprising:

a positive electrode current collector, and a positive electrode active layer provided on at least one side of the positive electrode current collector and including a compound represented by the following chemical formula 1 as a positive electrode active material:

[Chemical Formula 1] $Li_{1+a}Mn_{1-6-c}Fe_bM^1_cPO_4$

in the above chemical formula 1,
$M^1$ is one or more of Ti, V, Zr, Sr, Sb, B, or Nb,
a, b, and c are $-0.5 \leq a \leq 0.5$, $0.1 \leq b \leq 0.8$, $0.001 \leq c \leq 0.2$.

The positive electrode according to the present disclosure may refer to a positive electrode for a lithium secondary battery. The positive electrode includes a positive electrode active layer provided on at least one side of the positive electrode current collector. Here, the positive electrode active layer is a layer that implements the electrical activity of the positive electrode, and includes as a main component a positive electrode active material that implements an electrochemical oxidation-reduction reaction during charging and discharging of the battery. Specifically, the positive electrode active material may comprise from 80 parts by weight to 99.8 parts by weight of the total weight of the positive electrode active layer, and more specifically, it may include 95 parts by weight or more, 98 parts by weight or more, 84 parts by weight to 99.8 parts by weight, 90 parts by weight to 99.8 parts by weight, 94 parts by weight to 99.8 parts by weight, 88 parts by weight to 96 parts by weight, or 92 parts by weight to 97.5 parts by weight.

In addition, the positive electrode active material may include a compound represented by the chemical formula 1:

[Chemical Formula 1] $Li_{1+a}Mn_{1-6-c}Fe_bM^1_cPO_4$

in the above chemical formula 1,

$M^1$ is one or more of Ti, V, Zr, Sr, Sb, B, or Nb,
a, b, and c are $-0.5 \leq a \leq 0.5$, $0.1 \leq b \leq 0.8$, $0.001 \leq c \leq 0.2$.

The compound represented by the above chemical formula 1 has an olivine structure. The olivine structure shows high structural stability with a hexagonal crystalline form in which phosphorus (P) and oxygen (O) are strongly bonded. Therefore, the compound having an olivine crystalline structure can easily maintain its crystal structure even if all lithium ions are deintercalated during charging, and the decomposition of the crystalline structure does not easily occur even under high temperature conditions. Accordingly, the positive electrode active material has excellent lifespan characteristics and excellent features in all safety aspects including overcharge and overdischarge. In addition, since the positive electrode active material includes iron, which is resourcefully abundant and low-cost, it is lower in cost than lithium composite oxides such as $LiNi_{1/3}Co_{1/3}Mn_{1/3}O_2$, $LiCoO_2$, $LiNiO_2$, or $LiMn_2O_4$, and is also less toxic, and thus has less impact assigned to the environment.

However, lithium manganese iron phosphate ($LiMn_{1-b}Fe_bPO_4$) which includes only lithium (Li), manganese (Mn), and iron (Fe) as metals, has a somewhat higher energy density compared to lithium iron phosphate ($LiFePO_4$), but the difference is not significant. In addition, lithium manganese iron phosphate has a low rolling density like the lithium composite oxides described above, which limits the increase in energy density through rolling processes. Here, "rolling density" refers to a parameter indicating the degree of particle deformation of the positive electrode active material occurs under pressure. The rolling density may mean that the lower the rolling density under the same pressure conditions, the higher the compressive strength and the lower the energy density. In this regard, the present disclosure is characterized in that lithium manganese iron phosphate as a positive electrode active material is doped and/or substituted with one or more types of metals to provide high rolling density. Specifically, the positive electrode active material according to the present disclosure may have a structure in which one or more of titanium (Ti), vanadium (V), zirconium (Zr), and niobium (Nb) are doped and/or substituted in the lithium manganese iron phosphate.

As an example, the lithium manganese iron phosphate may include one or more of the compounds represented by the following chemical formula 2 to chemical formula 5:

[Chemical Formula 2]     $Li_{1+a}Mn_{1-b-x}Fe_bTi_xPO_4$

[Chemical Formula 3]     $Li_{1+a}Mn_{1-b-x-y}Fe_bTi_xV_yPO_4$

[Chemical Formula 4]     $Li_{1+a}Mn_{1-b-x-y-z}Fe_bTi_xV_yNb_zPO_4$

[Chemical Formula 5]     $Li_{1+a}Mn1_{-b-x-y-z}Fe_bT1_xZr_yNb_zPO_4$

in the above chemical formula 2 to chemical formula 5,
a, b, x, y, and z are $-0.5{\leq}a{\leq}0.5$, $0.1{\leq}b{\leq}0.8$, $0<x{\leq}0.2$, $0<y{\leq}0.1$, $0<z{\leq}0.1$, provided that $0.001{\leq}x+y{\leq}0.2$ or $0.001{\leq}x+y+z{\leq}0.2$.

The compounds represented by the above chemical formula 2 to chemical formula 5 are lithium manganese iron phosphate ($LiMn_{1-b}Fe_bPO_4$) doped or substituted with titanium (Ti), vanadium (V), zirconium (Zr), and/or niobium (Nb). At this time, the metals that are doped or substituted can be doped or substituted at 0.1 mole fraction or less based on the total 1 mole fraction of metals excluding lithium (Li), and the ratio (Li/Me) of lithium (Li) to these metals (Me) can be 1.01 to 1.50, specifically 1.01 to 1.30; 1.01 to 1.20; or 1.01 to 1.15. The concentration of lithium (Li) in the positive electrode active material is closely related to the density of the particles. Specifically, higher lithium concentration results in higher density, and in this case, a high rolling density can be achieved because it is easy to remove voids in the particles. However, excessively high lithium concentration can reduce electrical performance by decreasing the movement of lithium ions. In addition, significantly low lithium concentration not only has low particle density resulting in low rolling density, but also has a problem of low energy density per unit volume/mass when manufacturing the positive electrode. The present disclosure can overcome these problems by adjusting the ratio (Li/Me) of lithium (Li) to metal (Me) included in the positive electrode active material to the range described above.

Such positive electrode active materials include one or more of the compounds $LiMn_{0.8}Fe_{0.19}Ti_{0.01}PO_4$, $LiMn_{0.7}Fe_{0.29}Ti_{0.01}PO_4$, $LiMn_{0.6}Fe_{0.39}Ti_{0.01}PO_4$, $LiMn_{0.8}Fe_{0.17}Ti_{0.03}PO_4$, $LiMn_{0.7}Fe_{0.27}Ti_{0.03}PO_4$, $LiMn_{0.6}Fe_{0.37}Ti_{0.03}PO_4$, $LiMn_{0.8}Fe_{0.15}Ti_{0.05}PO_4$, $LiMn_{0.7}Fe_{0.25}Ti_{0.05}PO_4$, $LiMn_{0.6}Fe_{0.35}Ti_{0.05}PO_4$ , and the like compounds represented by the chemical formula 2; $LiMn_{0.8}Fe_{0.18}Ti_{0.01}V_{0.01}PO_4$, $LiMn_{0.7}Fe_{0.28}Ti_{0.01}V_{0.01}PO_4$, $LiMn_{0.6}Fe_{0.38}Ti_{0.01}V_{0.01}PO_4$, $LiMn_{0.8}Fe_{0.15}Ti_{0.025}V_{0.025}PO_4$, $LiMng_{0.7}Fe_{0.25}Ti_{0.025}V_{0.025}PO_4$, $LiMn_{0.6}Fe_{0.35}Ti_{0.025}V_{0.025}PO_4$, $LiMn_{0.8}Fe_{0.1}Ti_{0.05}V_{0.05}PO_4$, $LiMn_{0.7}Fe_{0.2}Ti_{0.05}V_{0.05}PO_4$, $LiMn_{0.6}Fe_{0.3}Ti_{0.05}V_{0.05}PO_4$ , and the like compounds represented by the chemical formula 3; $LiMn_{0.8}Fe_{0.17}Ti_{0.01}V_{0.01}Nb_{0.01}PO_4$, $LiMn_{0.7}Fe_{0.27}Ti_{0.01}V_{0.01}Nb_{0.01}PO_4$, $LiMn_{0.6}Fe_{0.37}Ti_{0.01}V_{0.01}Nb_{0.01}PO_4$, $LiMn_{0.8}Fe_{0.12}Ti_{0.03}V_{0.025}Nb_{0.025}PO_4$, $LiMn_{0.7}Fe_{0.22}Ti_{0.03}V_{0.025}Nb_{0.025}PO_4$, $LiMn_{0.6}Fe_{0.32}Ti_{0.03}V_{0.025}Nb_{0.025}PO_4$, $LiMn_{0.8}Fe_{0.05}Ti_{0.05}V_{0.05}Nb_{0.05}PO_4$, $LiMn_{0.7}Fe_{0.15}Ti_{0.05}V_{0.05}Nb_{0.05}PO_4$, $LiMn_{0.6}Fe_{0.25}Ti_{0.05}V_{0.05}Nb_{0.05}PO_4$ , and the like compounds represented by the chemical formula 4; and $LiMn_{0.8}Fe_{0.17}Ti_{0.01}Zr_{0.01}Nb_{0.01}PO_4$, $LiMn_{0.7}Fe_{0.27}Ti_{0.01}Zr_{0.01}Nb_{0.01}PO_4$, $LiMn_{0.6}Fe_{0.37}Ti_{0.01}Zr_{0.01}Nb_{0.01}PO_4$, $LiMn_{0.8}Fe_{0.12}Ti_{0.03}Zr_{0.025}Nb_{0.025}PO_4$, $LiMn_{0.7}Fe_{0.22}Ti_{0.03}Zr_{0.025}Nb_{0.025}PO_4$, $LiMn_{0.6}Fe_{0.32}Ti_{0.03}Zr_{0.025}Nb_{0.025}PO_4$, $LiMn_{0.8}Fe_{0.05}Ti_{0.05}Zr_{0.05}Nb_{0.05}PO_4$, $LiMn_{0.7}Fe_{0.15}Ti_{0.05}Zr_{0.05}Nb_{0.05}PO_4$, $LiMn_{0.6}Fe_{0.25}Ti_{0.05}Zr_{0.05}Nb_{0.05}PO_4$ , and the like compounds represented by chemical formula 5.

The positive electrode active material has a form in which one or more of titanium (Ti), vanadium (V), zirconium (Zr), and niobium (Nb) are doped and/or substituted in lithium manganese iron phosphate, thereby allowing the size of the positive electrode active material to meet a predetermined condition according to the number and/or mole fraction of the doped and/or substituted metals.

Specifically, in the positive electrode active material, a "particle" refers to a micrometer-sized grain, which, when observed under magnification, can be distinguished as "grains" with crystalline structures of several tens of nanometers. When these grains are further magnified, a unit area (i.e., crystal lattice) where atoms form a lattice structure in a certain direction can be identified, which is called a "crystallite." The positive electrode active material according to the present disclosure has a form in which one or more of titanium (Ti), vanadium (V), zirconium (Zr), and niobium (Nb) are doped and/or substituted in lithium manganese iron phosphate, so that the size of the crystallite and/or the size of the particle can be controlled to satisfy a predetermined range.

For example, as the type or mole fraction of the metal being doped or substituted increases, the lattice constant c of the lithium manganese iron phosphate constituting the positive electrode active material can increase, and the grain of the positive electrode active material may decrease in size. Here, the crystallite size of the positive electrode active material can be measured in the form of lattice constants a, b, c, etc., which represent the length of each side of the crystallite upon X-ray spectroscopic analysis.

More specifically, the positive electrode active material according to the present disclosure may be doped or substituted with titanium (Ti), vanadium (V), zirconium (Zr), niobium (Nb), or the like along with manganese (Mn), and may have a lattice constant c greater than about 4.6916 Å of lithium manganese iron phosphate($LiMn_{1-b}Fe_bPO_4$), which does not include any of the above transition metals. For example, the positive electrode active material may have a lattice constant c of 4.69165 Å to 4.80 Å upon X-ray diffraction analysis. More specifically, the positive electrode active material may have a lattice constant c of 4.69165 Å to 4.80 A; 4.69165 Å to 4.75 A; 4.69165 Å to 4.70 Å; 4. 69165 Å to 4.695 Å; 4.69165 Å to 4.694 Å; 4.69165 Å to 4.693 Å; 4.6917 Å to 4.6925 Å; or 4.6918 Å to 4.6925 Å.

The "lattice constant" is a value representing the edge length of a crystallite, used to describe the size and arrangement of a material, and can be expressed in various forms depending on the crystalline structure. In the case of an olivine structure, it has an orthorhombic crystal structure, and accordingly, it can have lattice constants a, b, and c. Among these, the lattice constant c is a factor representing the unit cell size in the c-axis direction of the crystal, which is closely related to the structural and chemical properties of the crystallite. For example, in the case of lithium manganese iron phosphate ($LiMn_{1-b}Fe_bPO_4$) with an olivine structure, the c-axis direction can act as the main transport path for lithium ion movement. The lattice constant c, which represents the size in the c-axis direction, can increase when ions with larger ionic radii than $Fe^{2+}$ and $Mn^{2+}$, such as $Ti^{4+}$, $V^{5+}$, $Nb^{5+}$, etc., are doped. The increase in lattice constant c can expand the lithium ion path, increasing the diffusion coefficient of lithium ions. Therefore, the positive electrode active material according to the present disclosure can have excellent electrical performance in the range of the lattice constant c described above. However, when the upper limit value of the above range is exceeded, a secondary phase may form inside the olivine structure. When a secondary phase is formed inside the olivine structure, the electrochemical activity may rather be reduced. In addition, when the lower limit value of the above range is below, the electrical performance of the positive electrode active material may be significantly reduced.

In addition, when the lattice constant c is expressed with respect to the lattice constants a and b, the positive electrode active material may show a linear relationship, which may follow Vegard's law. Specifically, the lattice constant c of the positive electrode active material may have a predetermined correlation with the square root of the sum of the squares of lattice constant a and lattice constant b, and such correlation can be expressed by the following equation 1:

[Equation 1]

$$y = -px + q$$

in the above equation 1,

y represents the lattice constant c,

x represents $\sqrt{a^2 + b^2}$, wherein a and b are lattice constants a and b, respectively,

p and q are $-0.08 \leq p \leq -0.07$ and $5 \leq q \leq 6$, respectively.

The above equation 1 represents the correlation between lattice constants a and b and lattice constant c of the lithium manganese iron phosphate represented by chemical formula 1, where a, b, and c may be measurement values according to X-ray spectroscopic analysis. The lattice constants a, b, and c and their correlation may vary depending not only on the type or mole fraction of the metal being doped and/or substituted, but also on the manufacturing method or process conditions of the lithium manganese iron phosphate. In the case of the present disclosure, as shown in FIG. 1, it shows a tendency to increase as the number or mole fraction of metals doped and/or substituted in lithium manganese iron phosphate increases. In other words, the positive electrode active material of the present disclosure satisfies the range of lattice constant c described above, and shows a tendency for the lattice constant c to increase as the number or mole fraction of the metal ($M^1$) doped and/or substituted in lithium manganese iron phosphate ($LiMn_{1-b}Fe_bPO_4$) increases, thus may satisfy the above equation 1. The fact that the lattice constant c shows a linear relationship when expressed with respect to the lattice constants a and b means that the olivine crystalline structure can be maintained even if multiple components (e.g., Ti, V, Zr, Sr, Sb, B, Nb, etc.) are doped or substituted in lithium manganese iron phosphate ($LiMn_{1-b}Fe_bPO_4$). In other words, it indirectly indicates that the structural stability of the positive electrode active material according to the present disclosure remains high even when a plurality of components is doped or substituted.

The grain formed by such lattice units can be identified for size through the X-axis size upon X-ray diffraction analysis. The size of the grain may be about 70 nm or more and less than 120 nm. More specifically, the size of the grain may be about 70 nm to 115 nm; about 70 nm to 105 nm; about 70 nm to 99 nm; about 70 nm to 95 nm; or about 80 nm to 99 nm. The present disclosure can implement high electrical performance by adjusting the grain size of the positive electrode active material to the range described above. Furthermore, since the positive electrode active material includes grains having the above size range, it is advantageous to form a dense structure by the applied pressure, and thus is characterized by high rolling density. In addition, since the grains having the above size range can uniformly distribute pressure during rolling, the positive electrode active material including them can uniformly implement rolling density across the active layer. However, excessively small grains with a size below the lower limit value may rather increase the rolling resistance, resulting in decreased process efficiency. In addition, when grains having a size exceeding the upper limit value are included, there is a limitation that the effect of increasing rolling density is insignificant.

Meanwhile, the grain is a particle formed by aggregated crystallites, and generally, as the size of the crystallite increases, the size of the grain may increase. However, in the case where a plurality of components is doped or substituted, such as the positive electrode active material according to the present disclosure, interference effects within the lattice thereof may occur. In this case, structural changes in the crystallite boundaries may be caused or the crystallite boundaries may increase, and thus the tendency of crystallite size increase to increase the grain size may not appear.

The positive electrode active material may have a certain tendency in particle size and size distribution. Accordingly, the positive electrode active material may satisfy a predetermined range of $D_{10}$, $D_{50}$, and $D_{90}/D_{10}$ in particle diameter distribution analysis.

Specifically, the positive electrode active material may have an average particle diameter ($D_{50}$) of 0.7 $\mu$m to 1.3 $\mu$m in particle diameter distribution analysis. For example, the positive electrode active material may have an average particle diameter ($D_{50}$) of 0.7 $\mu$m to 1.15 $\mu$m; 0.7 $\mu$m to 1.1 $\mu$m; 0.75 $\mu$m to 1.05 $\mu$m; 0.75 $\mu$m to 1.0 $\mu$m; or 0.75 $\mu$m to 0.95 $\mu$m in particle diameter distribution analysis.

In addition, the positive electrode active material may have a $D_{90}/D_{10}$ of 5.5 to 9.0 in particle diameter distribution analysis. For example, the positive electrode active material may have a $D_{90}/D_{10}$ of 6.0 to 8.5; 6.0 to 8.0; 6.1 to 8.0; 6.5 to 8.5; or 6.5 to 7.9 in particle diameter distribution analysis.

The positive electrode active material may have an average particle diameter ($D_{10}$) of 0.2 $\mu$m or more and less than 0.6 $\mu$m in particle diameter distribution analysis. For example, the positive electrode active material may have an average particle diameter ($D_{10}$) of 0.25 $\mu$m or more and less than 0.60 $\mu$m; 0.25 $\mu$m to 0.55 $\mu$m; 0.25 mm to 0.49 $\mu$m; 0.30 $\mu$m to 0.45 $\mu$m; 0.35 $\mu$m to 0.40 $\mu$m; 0.41 $\mu$m to 0.49 $\mu$m; or 0.35 $\mu$m to 0.49 $\mu$m in particle diameter distribution analysis.

The positive electrode includes a positive electrode active material layer prepared by coating a positive electrode slurry including a positive electrode active material on the positive electrode current collector and then drying. At this time, the particle diameter of the positive electrode active material may influence the density of the positive electrode active layer. In addition, the positive electrode may further increase the energy density through the rolling process of the positive electrode active layer during manufacturing. In this process, high pressure is applied to the positive electrode active material included in the positive electrode active layer, where the particle diameter of the positive electrode active material may influence the particle deformation of the positive electrode active material in response to the pressure. For example, when the particle diameter of the positive electrode active material is large, the particles may break in the rolling process, resulting in the loss of electron transport paths in the positive electrode, and the surface area where side reactions with the electrolyte may occur become larger, which may lead to inferior lifespan characteristics. In contrast, when the particle diameter of the positive electrode active material is small, there is a limitation in that the rolling density of the positive electrode active layer does not increase sufficiently in the rolling process due to increased porosity between the positive electrode active materials. Therefore, the present disclosure is characterized by controlling the number or mole fraction of metals doped and/or substituted in lithium manganese iron phosphate to adjust the particle size ($D_{10}$ and $D_{50}$) and size distribution ($D_{90}/D_{10}$) of the positive electrode active material to the range described above. The positive electrode active material according to the present disclosure is characterized by adjusting the particle size ($D_{10}$ and $D_{50}$) and size distribution ($D_{90}/D_{10}$) to the range described above to increase the energy density of the positive electrode active layer while minimizing particle deformation of the positive electrode active material during the rolling process and achieving high rolling density.

As an example, the positive electrode active material according to the present disclosure may have a rolling density of 2.3 g/cc or more when pressurized to a pressure of 9,000 Kgf by having the particle size and size distribution described above. Specifically, the positive electrode active material may have a rolling density of 2.30 g/cc to 2.60 g/cc; 2.30 g/cc to 2.50 g/cc; 2.31 g/cc to 2.49 g/cc; 2.35 g/cc to 2.49 g/cc; or 2.36 g/cc to 2.45 g/cc when pressurized at a pressure of 9,000 Kgf.

Meanwhile, the positive electrode active layer may selectively further include a conductive material, a binder, other additives, etc., along with the positive electrode active material as the main component.

In this case, the conductive material may include one or more of acetylene black, Super-P, channel black, furnace black, lamp black, thermal black, graphene, carbon nanotubes, and carbon fibers, but is not limited thereto.

The content of the conductive material may be 0.1 to 10 parts by weight with respect to 100 parts by weight of the total electrode active layer, and specifically, it may be 0.1 to 8 parts by weight, 0.1 to 5 parts by weight, 0.1 to 3 parts by weight, 2 to 6 parts by weight, or 0.5 to 2 parts by weight. The present disclosure can prevent a decrease in charging capacity due to an increase in electrode resistance caused by a low content of conductive material by controlling the content of the conductive material to the above range, and can prevent problems such as a decrease in charging capacity due to a decrease in the content of the electrode active material, or a decrease in rapid charging characteristics due to an increase in the loading amount of the electrode active layer, caused by an excessive amount of conductive material.

In addition, the binder, as a component that assists in binding the positive electrode active material and the conductive material, etc., and binding to the current collector, may be appropriately applied within a range that does not deteriorate the electrical properties of the positive electrode, but specifically, it may include one or more of vinylidene fluoride-hexafluoropropylene copolymer (PVDF-co-HFP), polyvinylidene fluoride (PVdF), polyacrylonitrile, polymethylmethacrylate, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, polyacrylic acid, ethylene-propylene-diene monomer, sulfonated ethylene-propylene-diene monomer, styrene-butadiene rubber (SBR), and fluorine rubber.

The content of the binder may be 0.1 to 10 parts by weight with respect to 100 parts by weight of the total positive electrode active layer, and specifically, it may be 0.1 to 8 parts by weight, 0.1 to 5 parts by weight, 0.1 to 3 parts by weight, or 2 to 6 parts by weight. The present disclosure can prevent deterioration of the adhesion of the active layer due to a low content of binder or deterioration of the electrical properties of the positive electrode due to an excessive amount of binder by controlling the content of the binder contained in the positive electrode active layer to the above range.

Furthermore, the average thickness of the positive electrode active layer may be 50 $\mu$m to 500 $\mu$m. Specifically, the average thickness of the positive electrode active layer may be 100 $\mu$m to 400 $\mu$m; 200 $\mu$m to 350 $\mu$m; 50 $\mu$m to 180 $\mu$m; 80 $\mu$m to 150 $\mu$m; 100 $\mu$m to 250 $\mu$m; or 130 $\mu$m to 190 $\mu$m. The present disclosure can not only implement high adhesion between the positive electrode active layer and the positive electrode current collector but also implement high energy density of the positive electrode by adjusting the average thickness of the positive electrode active layer to the above range.

Moreover, the positive electrode current collector may use one that has high conductivity without causing chemical changes in the battery. For example, stainless steel, aluminum, nickel, titanium, baked carbon, etc. may be used, and in the case of aluminum or stainless steel, those surface-treated with carbon, nickel, titanium, silver, etc. may also be used. In addition, the average thickness of the current collector may be appropriately applied in the range of 3 $\mu$m to 500 $\mu$m considering the conductivity and total thickness of the manufactured positive electrode.

The positive electrode according to the present disclosure not only has excellent high-temperature stability and lifespan characteristics by having the structure described above, but also has the advantage of excellent energy density and rolling density.

**Method for manufacturing positive electrode**

Furthermore, the present disclosure provides a method for manufacturing the positive electrode according to the present disclosure.

Specifically, the method for manufacturing the positive electrode includes coating at least one side of a positive electrode current collector with a positive electrode slurry including a compound represented by the following chemical formula 1 as a positive electrode active material (S1), and drying the coated positive electrode slurry to form a positive electrode active layer (S2):

[Chemical Formula 1] $\quad\quad Li_{1+a}Mn_{1-6-c}Fe_bM^1_cPO_4$

in the above chemical formula 1,

$M^1$ is one or more of Ti, V, Zr, Sr, Sb, B, or Nb,
a, b, and c are $-0.5 \le a \le 0.5$, $0.1 \le b \le 0.8$, $0.001 \le c \le 0.2$.

Here, the coating of the positive electrode slurry (S1) refers to the process of discharging a positive electrode slurry containing a compound represented by the following chemical formula 1 onto the surface of a moving positive electrode current collector. This process can be applied without particular limitation as long as it is a method commonly applied in the art, but preferably, a die coating method can be used. The die coating method can be performed through a slot die equipped with a shim for controlling the discharge conditions of the positive electrode slurry. In this case, the loading amount and coating thickness of the positive electrode slurry coated on the positive electrode current collector can be easily controlled by adjusting the shape, position, etc. of the shim.

Additionally, the positive electrode slurry is intended to form the positive electrode active layer of the positive electrode. Therefore, the positive electrode slurry primarily contains positive electrode active material and may further include conductive material, binder, etc., as needed. Since the composition of the positive electrode active material, conductive material, binder, etc. included in the positive electrode slurry is the same as that of the positive electrode active layer of the positive electrode described above, a detailed explanation is omitted.

However, the positive electrode active material may be manufactured through a specific process. Generally, conventional olivine-structured positive electrode active materials are prepared by mixing precursor compounds containing each transition metal with lithium phosphate, which is a lithium source material, and calcining this mixture at high temperature. However, the positive electrode active material of the present disclosure may be prepared by first forming a lithium manganese iron phosphate represented by chemical formula 6 through calcination of a mixture of a manganese precursor compound, an iron precursor compound, and a lithium phosphate compound, and subsequently mixing and calcining precursor compounds of metals to be doped and/or substituted.

Specifically, the positive electrode active material can be manufactured by calcining a mixture of the compound represented by the following chemical formula 6 and metal precursor compounds at a temperature of 500°C or higher, more specifically at 500°C to 1,000°C; 500°C to 900°C; 500°C to 800°C; or 500°C to 750°C:

[Chemical Formula 6]     $Li_{1+m}Mn_{1-n}Fe_nPO_4$

in the above chemical formula 6,
m and n are -0.5≤m≤0.5, 0.1≤n≤0.8.

The present disclosure can prevent over-sintering of materials due to temperatures exceeding the upper limit value by performing calcination in the temperature range described above during the manufacture of positive electrode active material. Additionally, by promoting bonding between the compound represented by chemical formula 6 and metal precursor compounds in the described temperature range while minimizing lithium evaporation during calcination, the density of the manufactured positive electrode active material can be further increased. High-density particles refer to the compactness of particles arranged within a specific volume, and particles with higher density can achieve higher rolling density and strength after rolling.

The compound represented by chemical formula 6 can be preliminarily heat-treated at 500°C to 900°C for 0.1 hours to 20 hours before being mixed with the metal precursor compound. Specifically, the compound represented by chemical formula 6 can undergo a pre-calcination process for 1 hour to 6 hours; or 1 hour to 3 hours before being mixed with the metal precursor compound. At this time, the pre-calcination process temperature may be 500°C to 800°C; or 550°C to 750°C. The present disclosure can significantly reduce the moisture content in the lithium manganese iron phosphate by performing heat treatment of the lithium manganese iron phosphate represented by chemical formula 6 under the described conditions before mixing with the metal precursor compound. Through this, metals contained in the metal precursor compound can be easily doped into the lithium manganese iron phosphate or substituted at the iron atom position. However, at temperatures lower than the described temperature range, there is a limitation that moisture in the lithium manganese iron phosphate is not sufficiently removed, and at temperatures higher than the described temperature range, the crystallinity of the lithium manganese iron phosphate may increase further, making it rather difficult to dope and/or substitute metals.

The compound of chemical formula 6 that has been heat-treated in such method can be mixed with metal precursor compounds and calcined, thereby manufacturing the positive electrode active material of the present disclosure. Here, the metal precursor compounds refer to raw materials that supply titanium (Ti), vanadium (V), zirconium (Zr), niobium (Nb), etc. to the lithium manganese iron phosphate represented by chemical formula 6. The metal precursor compounds are not particularly limited as long as they can provide titanium (Ti), vanadium (V), zirconium (Zr), and/or niobium (Nb).

Preferably, the titanium (Ti) precursor compound may include one or more of titanium oxide or titanium alkoxide containing titanium (Ti) as a component. For example, the titanium (Ti) precursor compound may include titanium oxides such as TiO, $TiO_2$, or titanium alkoxides such as $Ti[OCH(CH_3)_2]_4$, but is not limited thereto.

Additionally, the vanadium (V) precursor compound may be a vanadium-containing oxide, a vanadium-containing ammonium salt, or a combination thereof. For example, the vanadium (V) precursor compound may include vanadium oxides such as $VO_2$, $V_2O_3$, $V_2O_5$, or ammonium vanadate ($NH_4VO_3$), but is not limited thereto.

The zirconium (Zr) precursor compound may be a zirconium-containing oxide, a zirconium-containing acetate, or a combination thereof. For example, the zirconium (Zr) precursor compound may include zirconium oxides such as $ZrO_2$, or compounds such as $Zr_6O_4(OH)_4(O_2CCH_3)_{12}$, but is not limited thereto.

Moreover, the niobium (Nb) precursor compound may be a niobium-containing acetate, nitrate, sulfate, halide, sulfide, hydroxide, oxide, oxyhydroxide, or a combination thereof. For example, the niobium (Nb) precursor compound may include niobium oxides such as NbO, $NbO_2$, $Nb_2O_5$; niobium salts such as $NbCO_3$, $Nb(NO_3)_2$, $NbSO_4$, niobium acetate, niobium dicarboxylate, niobium citrate, niobium fatty acid salts; niobium oxyhydroxide; niobium chloride; or combinations thereof, but is not limited thereto.

Meanwhile, the method for manufacturing the positive electrode may include a process of forming a positive electrode active layer from the coated positive electrode slurry. The process of forming the positive electrode active layer may refer to the process of drying the positive electrode slurry. In this case, the drying of the positive electrode slurry can be applied without particular limitation as long as it is a method that can be conventionally applied in the art. For example, the drying can dry the positive electrode slurry by applying thermal energy to the positive electrode slurry using a hot air dryer, vacuum oven, etc.

In addition, the manufacturing method according to the present disclosure may further include a process of rolling the positive electrode active layer formed by drying the positive electrode slurry. The rolling refers to a process of increasing the density of the entire positive electrode active layer by applying pressure to the surface of the formed positive electrode active layer using a roll press, etc. For this purpose, the rolling can be performed under certain pressure and speed conditions at a temperature higher than room temperature.

Specifically, the rolling can be performed at a temperature of 50°C to 100°C, more specifically at 60°C to 100°C; 75°C to 100°C; 85°C to 100°C; 50°C to 90°C; 60°C to 80°C; or 65°C to 90°C.

Additionally, the rolling can be performed at a rolling speed of 2m/s to 7m/s, more specifically at 2m/s to 6.5m/s; 2m/s to 6m/s; 2m/s to 5.5m/s; 2m/s to 5m/s; 2m/s to 4.5m/s; 2m/s to 4m/s; 2.5m/s to 4m/s; 2.5m/s to 3.5m/s; 3.5m/s to 5m/s; 5m/s to 7m/s; 5.5m/s to 6.5m/s; or 6m/s to 7m/s.

Moreover, the rolling can be performed under a pressure condition of 50MPa to 200MPa, specifically at 50MPa to 150MPa; 50MPa to 100MPa; 100MPa to 200MPa; 150MPa to 200MPa; or 80MPa to 140MPa.

The present disclosure can maximize the energy density of the positive electrode active layer while minimizing damage to the positive electrode active layer formed by performing rolling under the above temperature, speed, and/or pressure conditions.

The method for manufacturing a positive electrode according to the present disclosure can produce a positive electrode with excellent energy density by having the configuration described above.

Hereinafter, the present disclosure will be described in more detail through examples and comparative examples.

However, the following examples and comparative examples are merely illustrating the present disclosure, and the content of the present disclosure is not limited to the following examples and comparative examples.

**Preparation Examples 1 to 7. Manufacturing of positive electrode active material**

First, the positive electrode active material was prepared. Specifically, lithium manganese iron phosphate ($LiMn_{0.7}Fe_{0.3}PO_4$) was purchased commercially. Titanium dioxide ($TiO_2$), ammonium vanadate ($NH_4VO_3$), and niobium oxide ($Nb_2O_5$) were mixed with the purchased lithium manganese iron phosphate, and calcined at 700±20°C under a nitrogen atmosphere to manufacture the positive electrode active material. At this time, the mixing amounts of titanium dioxide ($TiO_2$), ammonium vanadate ($NH_4VO_3$), and niobium oxide ($Nb_2O_5$) were adjusted so that the mole fraction of metals contained in the metal precursor compounds, based on a mole fraction of 1 for all metals excluding lithium in the manufactured positive electrode active material, satisfied Table 1. In addition, Table 1 shows whether heat treatment was performed on the commercially purchased lithium manganese iron phosphate before mixing with the metal precursor compounds.

X-ray diffraction (XRD) was performed on the manufactured positive electrode active material to measure ① lattice constants a, b, and c, and ② X-axis size representing grain size. Specifically, X-ray diffraction spectroscopy analysis was performed using the Rietveld refinement method, considering the metals doped and/or substituted in the lithium manganese iron phosphate ($LiMn_{0.7}Fe_{0.3}PO_4$). At this time, the X-ray diffraction analysis was conducted using a Bruker D8 Endeavor (Cu-Kα, λ=1.54Å) equipped with a LynxEye XE-T position sensitive detector or a LynxEye position sensitive detector, with the sample placed in the groove of a general powder holder. Afterwards, the sample surface was leveled using a slide glass, and the sample height was filled to match the edge of the holder, then measured under the conditions of FDS 0.5°, 2θ=15°~90° region, step size=0.02°, total scan time=approximately 20 minutes. For crystal grain size analysis, instrumental broadening was considered using the Fundamental Parameter Approach (FPA) built into the Bruker TOPAS program, and all peaks in the measurement range were used during fitting. The peak shape used was FP (first principle) with Lorentzian contribution among the peak shapes available in TOPAS, and strain was not considered at this time. The measured lattice constant c and the crystal grain size (i.e., X-axis size) are shown in Table 1, and the correlation between lattice constant c and lattice constants a and b is shown in Figure 1. Referring to Figure 1, the lattice constant c shows a linear relationship when plotted against lattice constants a and b, and it was confirmed that as the concentration of lithium (Li) in the structure increases, it tends toward the lower right. Additionally, as the number of types of metals doped and/or substituted in the positive electrode active material increases, a linear relationship appears, confirming that it follows Vegard's law.

In addition, particle diameter distribution analysis (PSD, particle size distribution) was performed on the positive electrode active material to measure ③ $D_{10}$, $D_{50}$, and $D_{90}$ of the positive electrode active material, and $D_{90}/D_{10}$ was calculated from the measured values. Specifically, the particle size distribution analysis (PSD) was performed by the laser diffraction method. The particle size distribution analysis (PSD) device used was a Mastersizer 3000 from Malvern, and the laser refractive index was adjusted to 2.0 to 2.2. After dispersing less than 1g of each positive electrode active material in deionized water (DI water) using an ultrasonic irradiator installed inside the device, the particle size distribution was calculated by measuring the difference in diffraction patterns according to particle size when the dispersed particles pass through the laser beam. At this time, $D_{10}$ can be measured by calculating the particle diameter at the point where 10% of the cumulative area distribution according to particle diameter in the measuring device is reached, and $D_{50}$ and $D_{90}$ were measured in the same method. The measured and calculated results are shown in Table 1 below.

Finally, the rolling density was measured for each positive electrode active material. Specifically, 5g of positive electrode active material was measured and placed in a cylindrical holder, and the powder density was measured while increasing the pressure from 400 kgf to 9,000 kgf at intervals of 400 kgf. As a result, the rolling density of the positive electrode active material at 9000 kgf is shown in Table 1 below.

[Table 1]

| | | Preparation Example 1 | Preparation Example 2 | Preparation Example 3 | Preparation Example 4 | Preparation Example 5 | Preparation Example 6 | Preparation Example 7 |
|---|---|---|---|---|---|---|---|---|
| Metal precursor compound | $TiO_2$ | 0.06 | 0.03 | 0.02 | 0.01 | 0.02 | 0.04 | - |
| | $NH_4VO_3$ | - | 0.03 | 0.02 | 0.01 | 0.02 | 0.04 | - |
| | $Nb_2O_5$ | - | - | 0.02 | 0.01 | 0.02 | 0.04 | - |
| Whether heat-treatment is performed before mixing with metal precursor compound (700°C for 1 hour) | | X | X | X | O | O | O | - |
| XRD | Lattice constant c | 4.69184 Å | 4.69202 Å | 4.69209 Å | 4.69205 Å | 4.69214 Å | 4.69218 Å | 4.69162 Å |
| | X-axis size | 100nm | 96nm | 91nm | 89nm | 88nm | 87nm | 120nm |
| PSD | $D_{10}$ | 0.50$\mu$m | 0.47$\mu$m | 0.42$\mu$m | 0.43$\mu$m | 0.38$\mu$m | 0.36$\mu$m | 0.60$\mu$m |
| | $D_{50}$ | 1.20$\mu$m | 1.03$\mu$m | 0.90$\mu$m | 0.85$\mu$m | 0.81$\mu$m | 0.78$\mu$m | 1.40$\mu$m |
| | $D_{90}/D_{10}$ | 6.0 | 6.2 | 6.9 | 7.2 | 7.6 | 7.8 | 5.0 |
| Rolling density (@ 9000 kgf) | | 2.34 g/cc | 2.37 g/cc | 2.41 g/cc | 2.41 g/cc | 2.43 g/cc | 2.45 g/cc | 2.28 g/cc |

13

Examples 1 to 6 and Comparative Example 1. Manufacturing of positive electrode

N-methylpyrrolidone solvent was injected into a homo mixer, and 90 parts by weight of each positive electrode active material prepared in Preparation Examples 1 to 7, 5 parts by weight of carbon black as a conductive material, and 5 parts by weight of polyvinylidene fluoride (PVdF) as a binder were added respectively. Then, the mixture was mixed at 3,000 rpm for 60 minutes to prepare a positive electrode slurry. An aluminum foil (average thickness: 12 $\mu$m) was prepared as a positive electrode current collector, and the previously prepared positive electrode slurry was cast on one side of the prepared aluminum foil. The aluminum foil with the positive electrode slurry cast on it was dried in a vacuum oven at 130°C and then rolled to manufacture a positive electrode. At this time, the total thickness of the rolled positive electrode active layer was 150 $\mu$m.

[Table 2]

| | Type of applied positive electrode active material |
|---|---|
| Example 1 | Positive electrode active material prepared in Preparation Example 1 |
| Example 2 | Positive electrode active material prepared in Preparation Example 2 |
| Example 3 | Positive electrode active material prepared in Preparation Example 3 |
| Example 4 | Positive electrode active material prepared in Preparation Example 4 |
| Example 5 | Positive electrode active material prepared in Preparation Example 5 |
| Example 6 | Positive electrode active material prepared in Preparation Example 6 |
| Comparative Example 1 | Positive electrode active material prepared in Preparation Example 7 |

**Experimental Example.**

The following experiments were performed to evaluate the performance of the positive electrode according to the present disclosure.

First, a lithium metal disc was prepared as a negative electrode. The prepared negative electrode and the positive electrodes prepared in Examples 1 to 6 and Comparative Example 1 were placed opposite to each other, and a separator composed of 18 $\mu$m polypropylene was interposed between them to fabricate an electrode assembly. Each manufactured electrode assembly was inserted into a battery case, the electrolyte composition was injected into the battery case, and then the case was sealed to manufacture a half-cell. At this time, as the electrolyte composition, a solution in which lithium hexafluorophosphate (LiPF$_6$, 1.0M) was mixed with a mixture of ethylene carbonate (EC): ethyl methyl carbonate (EMC) = 1:1 (volume ratio) was used.

The manufactured half-cell was charged with a constant current of 0.1C at 25°C until the voltage reached 4.25V, and discharged with a constant current of 0.1C until the voltage reached 2.5V. At this time, the initial charge capacity and initial discharge capacity were confirmed by measuring each capacity during charge and discharge, and the initial charge-discharge efficiency(@0.1C) was calculated by estimating the ratio of the initial discharge capacity to the initial charge capacity.

Separately, to evaluate the output characteristics of each positive electrode, the previously discharged half-cell was charged at 25°C until SOC 50%, and the resistance was measured. At this time, as the resistance, the width of voltage drop when current was applied was measured, and the results are shown in Table 3 below.

[Table 3]

| | Initial charge-discharge(@0.1 C) | | | Room temperature resistance |
|---|---|---|---|---|
| | Charge capacity | Discharge capacity | Efficiency | |
| Example 1 | 150.5 mAh/g | 146.0 mAh/g | 97.0% | 18.2 mΩ |
| Example 2 | 153.4 mAh/g | 149.1 mAh/g | 97.2% | 16.4 mΩ |
| Example 3 | 155.2 mAh/g | 151.2 mAh/g | 97.4% | 15.2 mΩ |
| Example 4 | 156.3 mAh/g | 151.7 mAh/g | 97.4% | 14.6 mΩ |
| Example 5 | 158.1 mAh/g | 154.1 mAh/g | 97.5% | 14.0 mΩ |
| Example 6 | 159.8 mAh/g | 155.5 mAh/g | 97.6% | 13.9 mΩ |

(continued)

| | Initial charge-discharge(@0.1 C) | | | Room temperature resistance |
|---|---|---|---|---|
| | Charge capacity | Discharge capacity | Efficiency | |
| Comparative Example 1 | 145.0 mAh/g | 140.0 mAh/g | 96.5% | 22.4 mΩ |

As shown in Table 3 above, it can be seen that the positive electrode according to the present disclosure has high energy density and excellent output performance.

Specifically, the half-cells including the positive electrodes of the Examples showed excellent energy density with initial charge-discharge capacities of 150 mAh/g or more and 145 mAh/g or more, respectively, and high initial charge-discharge efficiency of 97% or more.

In addition, the half-cells including the positive electrodes of the Examples showed low resistance of less than 19 mΩ at room temperature of 25°C.

From this, it can be seen that the positive electrode active material according to the present disclosure not only has high structural stability by including lithium manganese iron phosphate with an olivine structure, but also can easily control particle size distribution by having one or more metals doped and/or substituted in the crystalline structure. Therefore, it can be seen that the positive electrode including the same has significantly improved energy density.

While the present disclosure has been described with reference to exemplary embodiments thereof, it will be understood by those skilled in the art that various modifications and variations can be made therein without departing from the scope of the present disclosure as defined by the appended claims.

Therefore, the scope of the present disclosure should not be limited by the detailed description of the specification but should be determined by the appended claims.

**Claims**

1.　A positive electrode comprising:

　　　a positive electrode current collector, and
　　　a positive electrode active layer included on at least one side of the positive electrode current collector,
　　　wherein the positive electrode active material layer includes a positive electrode active material represented by chemical formula 1:

　　　　　　　　　　[Chemical Formula 1]　　　　　$Li_{1+a}Mn_{1-b-c}Fe_bM^1_cPO_4$

　　　wherein chemical formula 1,
　　　$M^1$ is one or more of Ti, V, Zr, Sr, Sb, B, or Nb,
　　　a, b, and c are $-0.5 \leq a \leq 0.5$, $0.1 \leq b \leq 0.8$, $0.001 \leq c \leq 0.2$.

2.　The positive electrode of claim 1, wherein the positive electrode active material comprises one or more of the compounds represented by chemical formula 2 to chemical formula 5:

　　　　　　　　[Chemical Formula 2]　　　　　$Li_{1+a}Mn_{1-b-x}Fe_bTi_xPO_4$

　　　　　　　　[Chemical Formula 3]　　　　　$Li_{1+a}Mn_{1-b-x-y}Fe_bTi_xV_yPO_4$

　　　　　　　　[Chemical Formula 4]　　　　　$Li_{1+a}Mn_{1-b-x-y-z}Fe_bTi_xV_yNb_zPO_4$

　　　　　　　　[Chemical Formula 5]　　　　　$Li_{1+a}Mn_{1-b-x-y-z}Fe_bTi_xZr_yNb_zPO_4$

　　　in the above chemical formula 2 to chemical formula 5,
　　　a, b, x, y, and z are $-0.5 \leq a \leq 0.5$, $0.1 \leq b \leq 0.8$, $0 < x \leq 0.2$, $0 < y \leq 0.1$, $0 < z \leq 0.1$, provided that $0.001 \leq x+y \leq 0.2$ or $0.001 \leq x+y+z \leq 0.2$.

3.　The positive electrode of claim 1, wherein the positive electrode active material has a lattice constant c ranging from 4.69165 Å to 4.80 Å when analyzed by X-ray diffraction, and satisfies equation 1:

[Equation 1]

$$y = -px + q$$

wherein equation 1,

y represents the lattice constant c,

x represents $\sqrt{a^2 + b^2}$, and wherein a and b are lattice constants a and b, respectively,
p and q are $-0.08 \leq p \leq -0.07$ and $5 \leq q \leq 6$, respectively.

4. The positive electrode of claim 1, wherein the positive electrode active material has an average particle diameter ($D_{50}$) ranging from 0.7 $\mu$m to 1.3 $\mu$m.

5. The positive electrode of claim 1, wherein, in a particle diameter distribution analysis, the positive electrode active material has a $D_{90}/D_{10}$ ranging from 5.5 to 9.0.

6. The positive electrode of claim 5, wherein the positive electrode active material has a $D_{10}$ of 0.2 $\mu$m or more and less than 0.6 $\mu$m.

7. The positive electrode of claim 1, wherein the positive electrode active material has a rolling density of 2.3 g/cc or more at 9,000 kgf pressurization.

8. A method for manufacturing the positive electrode according to claim 1, comprising steps of:

coating the at least one side of a positive electrode current collector with a positive electrode slurry comprising a compound represented by the following chemical formula 1 as a positive electrode active material, and drying the coated positive electrode slurry so as to form the positive electrode active layer:

[Chemical Formula 1] $\quad$ $Li_{1+a}Mn_{1-6-c}Fe_bM^1_cPO_4$

wherein the above chemical formula 1,
$M^1$ is one or more of Ti, V, Zr, Sr, Sb, B, or Nb,
a, b, and c are $-0.5 \leq a \leq 0.5$, $0.1 \leq b \leq 0.8$, $0.001 \leq c \leq 0.2$.

9. The method for manufacturing the positive electrode of claim 8, wherein the positive electrode active material comprises one or more compounds represented by chemical formula 2 to chemical formula 5:

[Chemical Formula 2] $\quad$ $Li_{1+a}Mn_{1-b-x}Fe_bTi_xPO_4$

[Chemical Formula 3] $\quad$ $Li_{1+a}Mn_{1-b-x-y}Fe_bTi_xV_yPO_4$

[Chemical Formula 4] $\quad$ $Li_{1+a}Mn_{1-x-y-z}Fe_bTi_xV_yNb_zPO_4$

[Chemical Formula 5] $\quad$ $Li_{1+a}Mn_{1-b-x-y-z}Fe_bTi_xZr_yNb_zPO_4$

wherein chemical formula 2 to chemical formula 5,
wherein a, b, x, y, and z are $-0.5 \leq a \leq 0.5$, $0.1 \leq b \leq 0.8$, $0 < x \leq 0.1$, $0 < y \leq 0.1$, $0 < z \leq 0.1$, provided that $0.001 \leq x+y+z \leq 0.2$.

10. The method for manufacturing the positive electrode of claim 8, wherein the positive electrode active material is prepared by calcining a mixture of lithium manganese iron phosphate represented by chemical formula 6 and a metal precursor compound at a temperature of 500°C or higher:

[Chemical Formula 6] $\quad$ $Li_{1+m}Mn_{1-n}Fe_nPO_4$

in the above chemical formula 6,
m and n are $-0.5 \leq m \leq 0.5$, $0.1 \leq n \leq 0.8$.

11. The method for manufacturing the positive electrode of claim 10, wherein the lithium manganese iron phosphate represented by chemical formula 6 is heat-treated at 500°C to 900°C before being mixed with the metal precursor compound.

【FIG. 1】

## INTERNATIONAL SEARCH REPORT

| International application No. |
| --- |
| **PCT/KR2025/000428** |

**A.    CLASSIFICATION OF SUBJECT MATTER**

**H01M 4/136**(2010.01)i; **H01M 4/58**(2010.01)i; **H01M 4/1397**(2010.01)i; **H01M 4/04**(2006.01)i; **H01M 10/052**(2010.01)i; **C01B 25/45**(2006.01)i; **H01M 4/02**(2006.01)i

According to International Patent Classification (IPC) or to both national classification and IPC

**B.    FIELDS SEARCHED**

Minimum documentation searched (classification system followed by classification symbols)

H01M 4/136(2010.01); C01B 25/30(2006.01); C01B 25/45(2006.01); H01M 4/36(2006.01); H01M 4/58(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 양극(cathode), 올리빈 결정구조(olivine crystal structure), 리튬 망간철 인산화물 (lithium manganese iron phosphate, LMFP), 에너지밀도(energy density)

**C.    DOCUMENTS CONSIDERED TO BE RELEVANT**

| Category* | Citation of document, with indication, where appropriate, of the relevant passages | Relevant to claim No. |
| --- | --- | --- |
| X | JP 2022-143505 A (TAIHEIYO CEMENT CORP.) 03 October 2022 (2022-10-03) See abstract; paragraphs [0011], [0056], [0067], [0068] and [0077]; and claim 4. | 1-4,8-11 |
| Y | | 5-7 |
| Y | KR 10-2013-0038377 A (SUED-CHEMIE IP GMBH & CO. KG) 17 April 2013 (2013-04-17) See abstract; and paragraphs [0032]-[0040] and [0050]. | 5-7 |
| X | JP 2022-143506 A (TAIHEIYO CEMENT CORP.) 03 October 2022 (2022-10-03) See abstract; paragraphs [0008]-[0013] and [0054]; and claims 1-6. | 1-4,8-11 |
| Y | | 5-7 |
| A | KR 10-2010-0044714 A (LG CHEM, LTD.) 30 April 2010 (2010-04-30) See abstract; and claims 1-15. | 1-11 |

| ✓ Further documents are listed in the continuation of Box C. | ✓ See patent family annex. |
| --- | --- |

\*    Special categories of cited documents:
"A"    document defining the general state of the art which is not considered to be of particular relevance
"D"    document cited by the applicant in the international application
"E"    earlier application or patent but published on or after the international filing date
"L"    document which may throw doubts on priority claim(s) or which is cited to establish the publication date of another citation or other special reason (as specified)
"O"    document referring to an oral disclosure, use, exhibition or other means
"P"    document published prior to the international filing date but later than the priority date claimed

"T"    later document published after the international filing date or priority date and not in conflict with the application but cited to understand the principle or theory underlying the invention
"X"    document of particular relevance; the claimed invention cannot be considered novel or cannot be considered to involve an inventive step when the document is taken alone
"Y"    document of particular relevance; the claimed invention cannot be considered to involve an inventive step when the document is combined with one or more other such documents, such combination being obvious to a person skilled in the art
"&"    document member of the same patent family

| Date of the actual completion of the international search | Date of mailing of the international search report |
| --- | --- |
| **14 April 2025** | **14 April 2025** |

| Name and mailing address of the ISA/KR | Authorized officer |
| --- | --- |
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2025/000428** |

| **C.** | **DOCUMENTS CONSIDERED TO BE RELEVANT** | |
| --- | --- | --- |
| Category* | Citation of document, with indication, where appropriate, of the relevant passages | Relevant to claim No. |
| A | KR 10-2021-0076147 A (TORAY INDUSTRIES, INC.) 23 June 2021 (2021-06-23)<br>See abstract; and claims 1-6. | 1-11 |

Form PCT/ISA/210 (second sheet) (July 2022)

**INTERNATIONAL SEARCH REPORT**
**Information on patent family members**

International application No.

**PCT/KR2025/000428**

| Patent document cited in search report | | | Publication date (day/month/year) | Patent family member(s) | | | Publication date (day/month/year) |
|---|---|---|---|---|---|---|---|
| JP | 2022-143505 | A | 03 October 2022 | None | | | |
| KR | 10-2013-0038377 | A | 17 April 2013 | CA | 2806004 | A1 | 02 February 2012 |
| | | | | CA | 2806004 | C | 10 September 2019 |
| | | | | CN | 103329318 | A | 25 September 2013 |
| | | | | CN | 103329318 | B | 10 August 2018 |
| | | | | DE | 102010032206 | A1 | 05 April 2012 |
| | | | | EP | 2599147 | A2 | 05 June 2013 |
| | | | | JP | 2013-541127 | A | 07 November 2013 |
| | | | | JP | 2016-040227 | A | 24 March 2016 |
| | | | | KR | 10-1609282 | B1 | 05 April 2016 |
| | | | | TW | 201204629 | A | 01 February 2012 |
| | | | | US | 2013-0224595 | A1 | 29 August 2013 |
| | | | | WO | 2012-013685 | A2 | 02 February 2012 |
| | | | | WO | 2012-013685 | A3 | 01 August 2013 |
| JP | 2022-143506 | A | 03 October 2022 | None | | | |
| KR | 10-2010-0044714 | A | 30 April 2010 | BR | PI0919654 | A2 | 08 December 2015 |
| | | | | BR | PI0919654 | B1 | 30 July 2019 |
| | | | | BR | PI0919655 | A2 | 01 December 2015 |
| | | | | BR | PI0919655 | B1 | 24 April 2019 |
| | | | | BR | PI0919658 | A2 | 15 October 2019 |
| | | | | BR | PI0919658 | B1 | 06 October 2020 |
| | | | | BR | PI0920372 | A2 | 09 August 2016 |
| | | | | BR | PI0920372 | B1 | 28 May 2019 |
| | | | | CA | 2740141 | A1 | 29 April 2010 |
| | | | | CA | 2740141 | C | 02 June 2015 |
| | | | | CA | 2741042 | A1 | 29 April 2010 |
| | | | | CA | 2741042 | C | 22 July 2014 |
| | | | | CA | 2741080 | A1 | 29 April 2010 |
| | | | | CA | 2741080 | C | 25 February 2014 |
| | | | | CA | 2741081 | A1 | 29 April 2010 |
| | | | | CA | 2741081 | C | 15 July 2014 |
| | | | | CN | 102177606 | A | 07 September 2011 |
| | | | | CN | 102177606 | B | 13 August 2014 |
| | | | | CN | 102186768 | A | 14 September 2011 |
| | | | | CN | 102186768 | B | 21 August 2013 |
| | | | | CN | 102186769 | A | 14 September 2011 |
| | | | | CN | 102187502 | A | 14 September 2011 |
| | | | | CN | 102187502 | B | 09 July 2014 |
| | | | | CN | 104201379 | A | 10 December 2014 |
| | | | | CN | 104201379 | B | 15 September 2017 |
| | | | | CN | 105322166 | A | 10 February 2016 |
| | | | | CN | 105322166 | B | 12 June 2020 |
| | | | | EP | 2339673 | A2 | 29 June 2011 |
| | | | | EP | 2339673 | A4 | 26 September 2012 |
| | | | | EP | 2339673 | B1 | 02 October 2013 |
| | | | | EP | 2339675 | A2 | 29 June 2011 |
| | | | | EP | 2339675 | A4 | 26 September 2012 |
| | | | | EP | 2339675 | B1 | 02 October 2013 |
| | | | | EP | 2360117 | A2 | 24 August 2011 |
| | | | | EP | 2360117 | A4 | 02 January 2013 |

Form PCT/ISA/210 (patent family annex) (July 2022)

## INTERNATIONAL SEARCH REPORT
### Information on patent family members

International application No.

**PCT/KR2025/000428**

| Patent document cited in search report | Publication date (day/month/year) | Patent family member(s) | | Publication date (day/month/year) |
|---|---|---|---|---|
| | | EP | 2360117 B1 | 06 May 2015 |
| | | EP | 2360118 A2 | 24 August 2011 |
| | | EP | 2360118 A4 | 03 October 2012 |
| | | EP | 2360118 B1 | 07 January 2015 |
| | | ES | 2533426 T3 | 10 April 2015 |
| | | ES | 2541202 T3 | 16 July 2015 |
| | | JP | 2012-506362 A | 15 March 2012 |
| | | JP | 2012-506363 A | 15 March 2012 |
| | | JP | 2012-506610 A | 15 March 2012 |
| | | JP | 2012-506611 A | 15 March 2012 |
| | | JP | 2014-063752 A | 10 April 2014 |
| | | JP | 2016-128371 A | 14 July 2016 |
| | | JP | 2018-062463 A | 19 April 2018 |
| | | JP | 5442744 B2 | 12 March 2014 |
| | | JP | 5474991 B2 | 16 April 2014 |
| | | JP | 5590571 B2 | 17 September 2014 |
| | | JP | 5803020 B2 | 04 November 2015 |
| | | JP | 5957728 B2 | 27 July 2016 |
| | | JP | 6254566 B2 | 27 December 2017 |
| | | KR | 10-1089089 B1 | 06 December 2011 |
| | | KR | 10-1108444 B1 | 31 January 2012 |
| | | KR | 10-1118008 B1 | 13 March 2012 |
| | | KR | 10-1128663 B1 | 23 March 2012 |
| | | KR | 10-1156951 B1 | 20 June 2012 |
| | | KR | 10-1183929 B1 | 18 September 2012 |
| | | KR | 10-2010-0044712 A | 30 April 2010 |
| | | KR | 10-2010-0044713 A | 30 April 2010 |
| | | KR | 10-2010-0044727 A | 30 April 2010 |
| | | KR | 10-2011-0111344 A | 11 October 2011 |
| | | KR | 10-2011-0114510 A | 19 October 2011 |
| | | RU | 2011115054 A | 27 November 2012 |
| | | RU | 2011115055 A | 27 November 2012 |
| | | RU | 2454755 C1 | 27 June 2012 |
| | | RU | 2467434 C1 | 20 November 2012 |
| | | RU | 2484009 C2 | 10 June 2013 |
| | | RU | 2488550 C2 | 27 July 2013 |
| | | TW | 201029919 A | 16 August 2010 |
| | | TW | 201029920 A | 16 August 2010 |
| | | TW | 201031045 A | 16 August 2010 |
| | | TW | I378590 B | 01 December 2012 |
| | | TW | I535651 B | 01 June 2016 |
| | | TW | I548589 B | 11 September 2016 |
| | | US | 10249877 B2 | 02 April 2019 |
| | | US | 2010-0233540 A1 | 16 September 2010 |
| | | US | 2010-0239909 A1 | 23 September 2010 |
| | | US | 2010-0261060 A1 | 14 October 2010 |
| | | US | 2011-0287315 A1 | 24 November 2011 |
| | | US | 8962185 B2 | 24 February 2015 |
| | | US | 8974957 B2 | 10 March 2015 |
| | | US | 9458016 B2 | 04 October 2016 |

Form PCT/ISA/210 (patent family annex) (July 2022)

**INTERNATIONAL SEARCH REPORT**
Information on patent family members

International application No.

**PCT/KR2025/000428**

| Patent document cited in search report | | | Publication date (day/month/year) | Patent family member(s) | | | Publication date (day/month/year) |
|---|---|---|---|---|---|---|---|
| | | | | WO | 2010-047522 | A2 | 29 April 2010 |
| | | | | WO | 2010-047522 | A3 | 29 July 2010 |
| | | | | WO | 2010-047524 | A2 | 29 April 2010 |
| | | | | WO | 2010-047524 | A3 | 29 July 2010 |
| | | | | WO | 2010-047525 | A2 | 29 April 2010 |
| | | | | WO | 2010-047525 | A3 | 29 July 2010 |
| | | | | WO | 2010-047552 | A2 | 29 April 2010 |
| | | | | WO | 2010-047552 | A3 | 05 August 2010 |
| KR | 10-2021-0076147 | A | 23 June 2021 | CN | 113039669 | A | 25 June 2021 |
| | | | | EP | 3893296 | A1 | 13 October 2021 |
| | | | | EP | 3893296 | A4 | 10 August 2022 |
| | | | | JP | 7259766 | B2 | 18 April 2023 |
| | | | | KR | 10-2305491 | B1 | 27 September 2021 |
| | | | | US | 2022-0006076 | A1 | 06 January 2022 |
| | | | | WO | 2020-116160 | A1 | 11 June 2020 |

Form PCT/ISA/210 (patent family annex) (July 2022)

23

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240003888
- KR 1020240183777
- KR 1020160064136